(19) Europäisches Patentamt
European Patent Office
Office européen des brevets

(11) **EP 4 534 214 A1**

(12) **EUROPEAN PATENT APPLICATION**
published in accordance with Art. 153(4) EPC

(43) Date of publication:
**09.04.2025 Bulletin 2025/15**

(21) Application number: **22944780.0**

(22) Date of filing: **30.05.2022**

(51) International Patent Classification (IPC):
**B06B 1/00** $^{(2006.01)}$

(52) Cooperative Patent Classification (CPC):
**B06B 1/00**

(86) International application number:
**PCT/JP2022/022009**

(87) International publication number:
**WO 2023/233491 (07.12.2023 Gazette 2023/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tohoku University**
**Sendai-shi, Miyagi 980-8577 (JP)**

(72) Inventors:
• **KONYO, Masashi**
  **Sendai-shi, Miyagi 980-8577 (JP)**
• **HOSHI, Yuya**
  **Sendai-shi, Miyagi 980-8577 (JP)**
• **TADOKORO, Satoshi**
  **Sendai-shi, Miyagi 980-8577 (JP)**

(74) Representative: **Hoffmann Eitle**
**Patent- und Rechtsanwälte PartmbB**
**Arabellastraße 30**
**81925 München (DE)**

(54) **VIBRATION PRESENTATION DEVICE, VIBRATION GENERATION SYSTEM, VIBRATION PRESENTATION PROGRAM, RECORDING MEDIUM STORING VIBRATION PRESENTATION PROGRAM, AND VIBRATION GENERATION METHOD**

(57) The present invention is to use an actuator to present low-frequency vibrations that are outside the resonance frequency band of the actuator and are difficult to present, so that humans can easily perceive (or be tricked into perceiving) the low-frequency vibrations. A vibration presentation device (1) for presenting a vibration in a first frequency band by an actuator (31) having a resonance frequency in a second frequency band larger than the first frequency band includes: an acquisition unit (101) configured to acquire a signal including at least a vibration in the first frequency band, which is a resonance frequency lower than the second frequency band; a calculation unit (102) configured to obtain a local maximum value of the vibration in the first frequency band acquired by the acquisition unit (101) and obtain, based on the local maximum value, a local maximum value time that is a time of reaching the local maximum value; and a control unit (103) configured to, based on the local maximum value time calculated by the calculation unit (102), control the actuator to generate a single wave within a transitioned time that is a time before, at and after the local maximum value time.

[FIG. 1]

**Description**

Technical Field

Technology described in the present specification relates to a vibration presentation device, a vibration generation system, a vibration presentation program, a recording medium storing a vibration presentation program, and a vibration generation method.

Background Art

In recent years, vibration feedback has advanced to enhance the sensation and immersive experience in the field of smartphones, game machines, virtual reality (VR) devices, robot operation support, and the like (see, for example, PTL 1). Since human vibration perception sensitivity to the vibration feedback is maximized around 200 Hz, as a vibrator equipped on a mobile terminal such as a smartphone, a vibrator of the linear resonant actuator (LRA) type having a resonance frequency of around 200 Hz, which is small in size and can express a frequency band of about 100 to 300 Hz, is often equipped on the device (see, for example, PTL 2).

In recent years, LRAs have become wider in bandwidth, and some capable of presenting a resonance frequency of about 50 to 400 Hz have been developed. There are also devices and game machine controllers whose vibrators are set at a resonance frequency of 60 Hz to 100 Hz (see, for example, PTL 3).

Citation List

Patent Literature

PTL 1: JP2003-228453A
PTL 2: WO2021/085506
PTL 3: JP2021-527257T
PTL 4: JP2004-181304A

Summary of Invention

Technical Problem

However, it is difficult to present vibration in a low-frequency range of several tens Hz, which is out of the resonance frequency in LRAs with a resonance frequency of around 50 Hz to 400 Hz. To make the resonance frequency equal to or less than 50 Hz so as to further enhance the sensation of the low-frequency band, it is necessary to increase the mass of the resonance system or to equip another vibrator for such a purpose. This increases the volume occupied by the vibrator.

PTL 4 discloses an invention that can reduce the size of a movable body that moves between biasing units such as springs, by performing control to apply an accumulation signal or an attenuation signal to a coil around the movable body, so as to adjust the amplitude of the movable body such that a pseudo vibration formed by an envelope connecting the peaks of the amplitude becomes a frequency that can be sensed by a person. This, however, depends on the structure of the vibrator, requires complicated input of multiple signals, and is unclear in the capability of reproducing a frequency equal to or less than 50 Hz.

Above all, the movements that currently need to be reproduced in game machines, VR devices, etc. are complicated and require easy provision of low-frequency. Unfortunately, in the technology disclosed in PTL 4, this is extremely difficult and particularly cannot be used in cases requiring online and real-time reproduction of signals.

For this reason, it is not easy to reproduce the sensation of low-frequency vibrations of several tens of Hz using a small information terminal equipped with only an LRA having a resonance frequency of around 100 Hz to 300 Hz, such as a smartphone.

An object of the technology described in this specification is to present low-frequency vibrations that are outside the resonance frequency band of an equipped actuator and are difficult to present, by devising ways to control the actuator without using an additional actuator, so that humans can easily perceive (or be tricked into perceiving) the low-frequency vibrations.

Solution to Problem

A vibration presentation device of the present invention is a vibration presentation device for presenting a vibration in a first frequency band by an actuator having a resonance frequency in a second frequency band larger than the first frequency band. The vibration presentation device includes: an acquisition unit configured to acquire a signal including at least a vibration in the first frequency band, which is a resonance frequency lower than the second frequency band; a calculation unit configured to obtain a local maximum value of the vibration in the first frequency band acquired by the acquisition unit and obtain, based on the local maximum value, a local maximum value time that is a time of reaching the local maximum value; and a control unit configured to, based on the local maximum value time calculated by the calculation unit, control the actuator to generate a single wave within a transitioned time that is a time before, at and after the local maximum value time.

Advantageous Effects of Invention

According to the present invention, it is possible to present a vibration at a frequency lower than a resonance frequency band that can be presented by an actuator in a manner of being converted to a vibration that can easily make humans perceive (or experience an illusion of) such frequency.

Brief Description of Drawings

[FIG. 1] FIG. 1 is a configuration diagram schematically illustrating a configuration example of a vibration generation system according to an embodiment.
[FIG. 2] FIG. 2 is a graph illustrating the principle of presentation of an alternative vibration for a low-frequency vibration by the vibration generation system illustrated in FIG. 1, where (a) is a graph illustrating an example of a low-frequency signal to be presented and a single waveform (short-time pulse waveform) to be controlled, and (b) is a graph illustrating an example of a reverberant vibration generated in a housing (measured by a laser displacement meter).
[FIG. 3] FIG. 3 is a graph illustrating the results of an experiment on subjects for the presentation of the alternative vibration for the low-frequency vibration according to the vibration generation system illustrated in FIG. 1, where (a) is a table illustrating selections for the answer by the subjects, and (b) to (e) are graphs illustrating the answer results when the low-frequency waveforms of the original (target signal) are 10 Hz, 20 Hz, 30 Hz, and 40 Hz, respectively.
[FIG. 4] (a) is a graph illustrating a first example of calculation of amplitude and timing by the vibration generation system illustrated in FIG. 1, and (b) is a graph illustrating a second example of the calculation of the amplitude and timing by the vibration generation system illustrated in FIG. 1.
[FIG. 5] FIG. 5 is a graph illustrating online calculation of the amplitude and timing of the low-frequency vibration.
[FIG. 6] FIG. 6 is a block diagram illustrating generation of a first vibration waveform and a second vibration waveform by the vibration generation system illustrated in FIG. 1.
[FIG. 7] (a) is a block diagram illustrating vibration generation when using a vibrator implemented with an actuator, and (b) is a block diagram illustrating the vibration generation when using a mobile terminal.

Description of Embodiments

Hereinafter, embodiments will be described with reference to the drawings. However, the embodiments described below are merely examples, and are not intended to exclude various modifications and application of techniques not explicitly described in the embodiments. That is, the present embodiment can be variously modified without departing from the gist thereof.
The drawings are not intended to include only the components illustrated in the drawings, and may include other components. Throughout the drawings, the portions denoted by the same reference numerals indicate the same or similar portions unless otherwise specified.

[A] Embodiment

A-1. Configuration of System

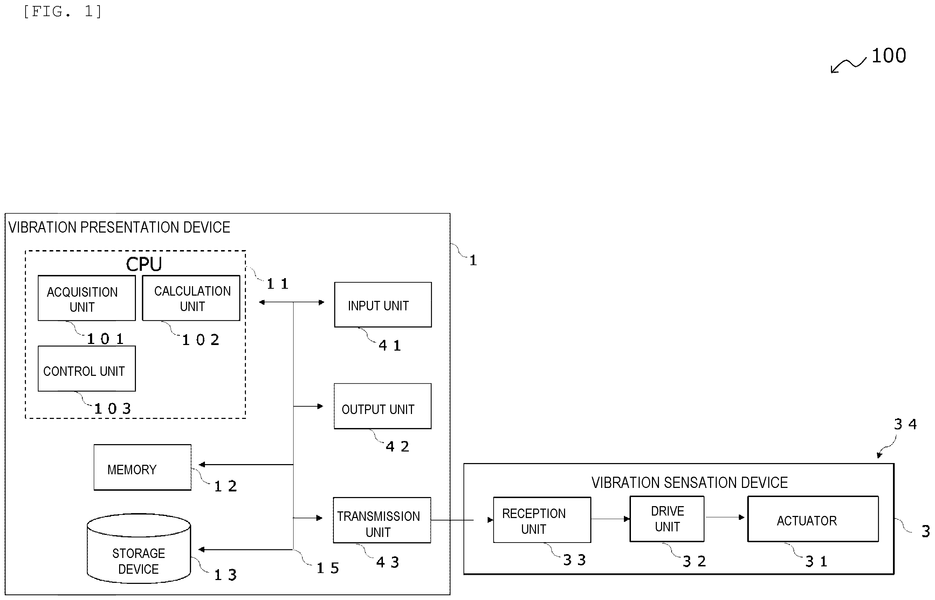

FIG. 1 is a diagram schematically illustrating a configuration example of a vibration generation system 100 according to an embodiment.
The vibration generation system 100 includes a vibration presentation device 1 and a vibration sensation device 3.

The vibration presentation device 1 includes a CPU 11, a memory 12, a storage device 13, an input unit 41, an output unit 42, and a transmission unit 43, which are connected by a bus 15.

The vibration sensation device 3 includes an actuator 31, a drive unit 32, and a reception unit 33, and is stored in a housing 34.

The vibration presentation device 1 and the vibration sensation device 3 may be provided separately or integrally. A part in the vibration presentation device 1 may be provided in the vibration sensation device 3. The housing 34 may store the entire vibration presentation device 1 if the vibration presentation device 1 and the vibration sensation device 3 are integrated.

The vibration generation system 100 according to an example of the present embodiment is mainly used for smartphones, game machines, virtual reality (VR) devices, robots, and the like, but may be applied to chairs, suits, headsets, and the like including a vibration device.

The vibration presentation device 1 includes a central processing unit (CPU) 11 for controlling and driving, the memory 12 and the storage device 13 for storing programs and the like, the input unit 41 for acquiring information including signals aimed to reproduce the original signal, the output unit 42 for outputting information other than tactile sensation such as vibration to the user, the transmission unit 43 for performing information communication with the vibration sensation device 3, and the bus 15 connecting these.

The CPU 11 is a processing device for performing various control and calculation, and implements various functions by executing an operating system (OS) and a vibration presentation program stored in the memory 12. That is, as illustrated in FIG. 1, the CPU 11 may function as an acquisition unit 101, a calculation unit 102, and a control unit 103.

The CPU 11 is an example of a computer and, for example, controls the entire operation of the vibration presentation device 1. The device for controlling the operation of the entire vibration presentation device 1 is not limited to the CPU 11, and may be, for example, one of MPU, DSP, ASIC, PLD, FPGA, or a dedicated processor. The device for controlling the overall operation of the vibration presentation device 1 may be a combination of two or more of CPU, MPU, DSP, ASIC, PLD, FPGA, and a dedicated processor. MPU is an abbreviation for micro processing unit, DSP is an abbreviation for digital signal processor, and ASIC is an abbreviation for application specific integrated circuit. PLD is an abbreviation for programmable logic device, and FPGA is an abbreviation for field programmable gate array.

The memory 12 is a recording medium storing an operating system (OS) and a vibration presentation program, and is implemented with a read only memory (ROM), a random access memory (RAM), and the like.

The storage device 13 is a device for storing data in a readable and writable manner, and may be, for example, a hard disk drive (HDD), a solid state drive (SSD), or a storage class memory (SCM). The storage device 13 stores information acquired by the input unit 41, and stores, in advance, a signal related to vibration or a tactile signal to be reproduced and various data calculated by the calculation unit 102 based on the vibration presentation program.

In the vibration presentation device 1, the input unit 41 acquires, online, various information including: acoustic information such as music and audio of a movie, a game, or the like; an impact; the sensation when operating; a vibration generated when a robot comes into contact with an object, and the like. The input unit 41 may not be provided if the storage device 13 or the like stores information for reproducing a tactile sense in advance.

In the vibration presentation device 1, the output unit 42 generates a video and a sound source for presenting information other than the vibration sensation device 3 to the user. The output unit 42 may not be provided as long as the output unit 42 does not present a video, a sound source, or the like to the user. Alternatively, the output unit 42 may be provided in the vibration sensation device 3.

The transmission unit 43 is a unit for transmitting a control signal via the reception unit 33 of the vibration sensation device 3 in a wired or wireless manner.

If the vibration presentation device 1 and the vibration sensation device 3 are integrated, the transmission unit 43 may use an analog signal such as a voltage or a communication method such as SPI, I2C, or I2S. The transmission unit 43 may be incorporated as a function of the CPU 11.

In the case of wired communication, a communication method such as USB, Thunderbolt (registered trademark), Ethernet (registered trademark), or HDMI (registered trademark) may be used.

In the case of wireless communication, for example, a communication unit for Bluetooth (registered trademark), WiFi, or ZigBee (registered trademark), or a communication unit for wireless local area network (LAN) may be used.

The acquisition unit 101, the calculation unit 102, and the control unit 103 of the CPU 11 will be specifically described.

The acquisition unit 101 is for acquiring the signals obtained from the input unit 41, including: acoustic information such as music and audio of a movie, a game, or the like; an impact; the sensation when operating; a vibration generated when a robot comes into contact with an object, and the like.

If stored in the storage device 13 or the like in advance, a signal or a tactile signal relating to the vibration to be reproduced is read and acquired from the storage device 13 to the acquisition unit 101.

The calculation unit 102 is a unit for analyzing the tactile signal acquired by the acquisition unit 101, and separating and extracting the tactile signal into a first frequency band and a second frequency band, or calculating the local maximum value, the time (timing) of the local maximum value, and the magnitude of the amplitude of the vibration in the first frequency band. The specific calculation will be described later.

The control unit 103 is a unit for generating a control signal to control the actuator. The control unit 103 controls the actuator 31 to reproduce the second frequency band calculated by the calculation unit 102, and controls the actuator 31 to generate a sine wave or a pulse wave such as a rectangular wave having at least a predetermined cycle (hereinafter also referred to as a "single wave cycle time") within a predetermined time including a local maximum value in the first frequency band, to reproduce a simulated first frequency band. The cycle may be a waveform of a half cycle, 1.5 cycles or two cycles, or a waveform of several cycles having different amplitudes, as long as within the predetermined time for generation. It may be possible to effectively generate reverberation in the housing 34 by using a waveform of several cycles having different amplitudes.

The sine wave, pulse wave, and the like to be generated may be collectively referred to as a single waveform. The single wave cycle time for generating the single waveform is, for example, a time equal to or shorter than one cycle of the reverberant vibration generated by the resonance system of the actuator 31 or the resonance system between the actuator 31 and the housing 34. A time cycle of 0.002 seconds or more and 0.02 seconds or less is preferable in consideration of, for example, a magnitude that can be sufficiently sensed by the user and a frequency that can be generated by current actuators. The single wave cycle time may be determined depending on the ratio of the cycle of the waveform of the vibration acquired by the acquisition unit 101.

Next, the vibration sensation device 3 will be described.

The vibration sensation device 3 of the present embodiment is a unit for reproducing, and providing to the user: acoustic information such as music and audio of a movie, a game, or the like; and a tactile signal such as an impact, the sensation when operating, and a vibration generated when a robot comes into contact with an object. The vibration sensation device 3 includes the actuator 31 for generating a vibration, the drive unit 32, and the reception unit 33. To make the reproduced tactile signal closer to the reality, the actuator 31 is equipped with an actuator 31 having a resonance system in a frequency band of about 50 to 350 Hz, which is a high-frequency band (second frequency band) in which the human vibration perception sensitivity is high. The present invention, for example, reproduces the high-frequency band by using the actuator 31 of 200 Hz $\pm$ 150 Hz, and presents a simulated vibration in the low-frequency band (first frequency band) of 100 Hz or less (10 Hz to 100 Hz, in particular, 10 Hz to 50 Hz) by using the actuator 31 in a manner of being converted into a form that can be sensed by humans.

In the present embodiment, the actuator 31 is a voice coil actuator using a magnet and a coil, such as a linear resonance actuator (LRA). The actuator 31 may be provided in the housing 34. In this case, the actuator 31 constitutes a resonance system together with the housing 34. The resonance frequency of the resonance system of the actuator 31 may be, for example, 200 Hz $\pm$ 150 Hz. The upper limit value of the resonance system of the actuator 31 may be, for example, 350 Hz, and the lower limit value may be 50 Hz.

The actuator 31 is not limited to a voice coil actuator, and may be configured as a weight in which the actuator 31 is supported by and connected to an elastic body in the housing 34, in which case the actuator 31, the elastic body, the weight, and the housing 34 constitute a resonance system. A battery or various components in the housing 34 may be used as the weight.

The drive unit 32 is a unit for driving the actuator based on a digital signal or analog signal for controlling the actuator 31 generated by the control unit 103 and received by the reception unit 33. The drive unit 32 may include an amplifier, a feedback circuit, or the like for driving the actuator 31 (not illustrated).

The reception unit 33 is a unit for receiving the control signal transmitted from the transmission unit 43 of the vibration presentation device 1. The reception unit 33 may be omitted if the signal of the transmission unit 43 is directly transmitted to the drive unit 32.

A-2. Presentation of Alternative Vibration

Hereinafter, a specific method according to the present invention for reproducing a simulated first frequency band by alternative vibration will be described.

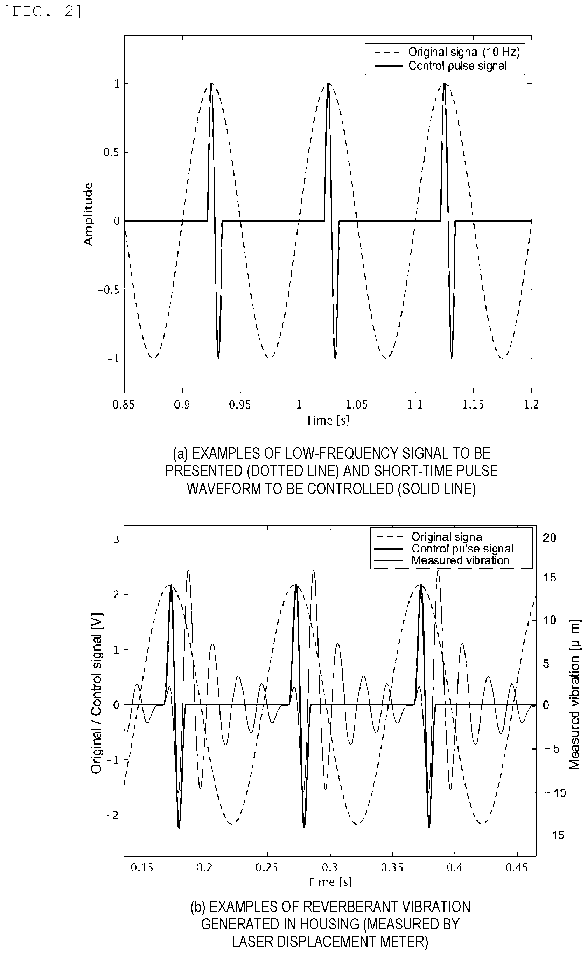

FIG. 2 is a graph illustrating the principle of the presentation of an alternative vibration for a low-frequency vibration by the vibration generation system 100 illustrated in FIG. 1, where (a) of FIG. 2 is a graph illustrating an example of the low-frequency signal to be presented and the short-time single waveform to be controlled, and (b) of FIG. 2 is a graph illustrating an example of reverberant vibration generated in the housing 34 (measured by a laser displacement meter).

In the graph illustrated in (a) of FIG. 2, the horizontal axis represents the time ([s]), the vertical axis represents the amplitude, the dotted line graph represents the waveform of the original signal to be reproduced at 10 Hz (the signal as the target to be reproduced by the alternative vibration (hereinafter, sometimes referred to as the "target signal")), and the solid line graph represents a pulse signal that is a single waveform generated by controlling the actuator 31 (control pulse signal). A short-time pulse signal is generated as an input waveform by controlling the actuator 31 in accordance with the peak timing of the low-frequency signal of the continuous target signal. In the example illustrated in (a) of FIG. 2, the pulse signal input from the actuator 31 uses a sine wave of one cycle. A characteristic low-frequency cycle is expressed by generating the pulse signal in accordance with the peak of the low-frequency signal.

The pulse signal to be controlled (in other words, the alternative waveform) is generated by the following formula. Here, A is the original low-frequency amplitude, f is the frequency of the alternative stimulus, and t' is the time at which the original low-frequency local maximum value is taken.

[Formula 1]

$$y(t) = \begin{cases} A\sin(2\pi ft) & \text{if } t' - \dfrac{1}{4f} \le t \le t' + \dfrac{3}{4f} \\ 0 & \text{otherwise} \end{cases}$$

In the graph illustrated in (b) of FIG. 2, the horizontal axis represents time ([s]), the vertical axis on the left represents the voltage of the original signal and the control signal ([V]), and the vertical axis on the right represents the displacement caused by the measured vibration ([μm]). The dotted line graph represents the original signal (target signal), the thick line graph represents the pulse signal generated by controlling the actuator 31 (control pulse signal), and the thin line graph represents the displacement generated and measured in the housing 34 of the vibration generation system 100 (measured vibration). In response to the short-time pulse input in the actuator 31, the natural vibration of the housing 34 including the actuator 31 generates a reverberant vibration. The reverberant vibration requires time to attenuate. This attenuation waveform is considered to generate a low-frequency sensation, which is originally difficult to reproduce by the actuator 31.

A-3. Sensation Evaluation of Alternative Vibration

We conducted actual investigation on the extent to which the aforementioned presentation method of the alternative vibration can present a low-frequency sensation.

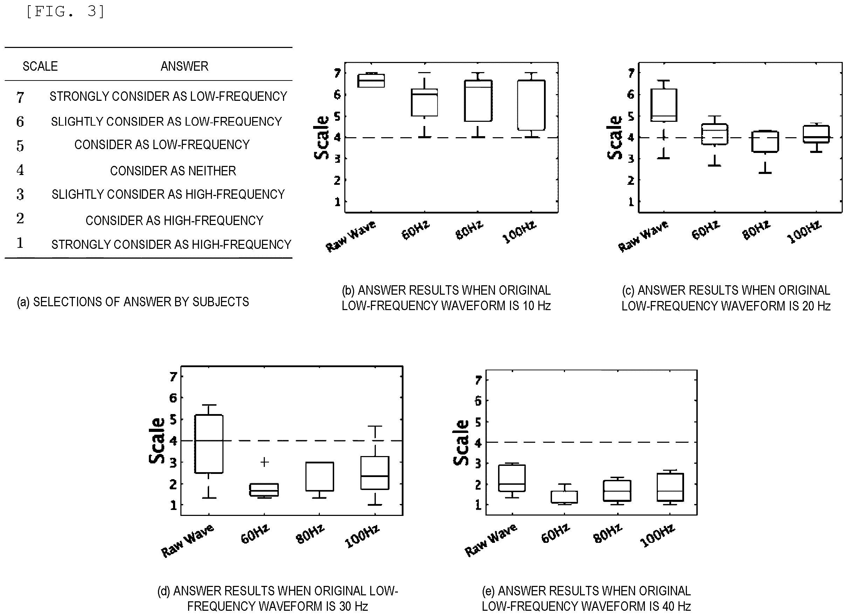

FIG. 3 is a diagram illustrating the results of an experiment on subjects for the presentation of the alternative vibration for the low-frequency vibration according to the vibration generation system 100, where (a) is a table illustrating selections for the answer by the subjects, (b) is a graph illustrating the results of the average value of three answers by the subjects when the low-frequency waveform of the target signal is 10 Hz, and (c) is a graph illustrating the results of the average value of three answers by the subjects when the low-frequency waveform of the target signal is 20 Hz. (d) is a graph illustrating the result of the average value of three answers of the subjects when the low-frequency waveform of the target signal is 30 Hz. (e) is a graph illustrating the result of the average value of three answers of the subjects when the low-frequency waveform of the target signal is 40 Hz. (b) to (e) illustrate the interquartile range and the median in addition to the maximum value and the minimum value of the selections appearing in the answers.

In the subject experiment in FIG. 3, the subjective sensation of the subjects was used to evaluate whether the low-frequency vibration as the target signal could be presented using the above-mentioned presentation method of the alternative vibration, with sine waves of 10 Hz, 20 Hz, 30 Hz, and 40 Hz being set as the low-frequency vibration as the target signal, and sine waves of 60 Hz, 80 Hz, and 100 Hz being used as the alternative vibration stimulus for the respective signals. In the sensation experiment, to prevent the answer from being selected based on information sensed by the subjects other than the vibration, a voice coil vibrator capable of presenting about 10 Hz to 100 Hz was held and sensed with one hand. The subjects were seven men and women in their 20s.

First, to teach the difference between low-frequency and high-frequency to the subjects, a sine wave of 10 Hz as the low-frequency and a sine wave of 80 Hz as the high-frequency were presented repeatedly until the subjects could distinguish the difference.

The stimulus that the subjects were asked to sense and evaluate included four types: the target signal, which is the low-frequency vibration itself (raw wave); the alternative vibration created using a sine wave of 60 Hz; the alternative vibration created using a sine wave of 80 Hz; and the alternative vibration created using a sine wave of 100 Hz, which were performed in the cases of the respective low-frequency vibrations of 10 Hz, 20 Hz, 30 Hz, and 40 Hz as the target signal.

In the sensation experiment, the subjects were presented stimulus for 5 seconds with a voice coil vibrator, and asked to answer whether the stimulus was determined as low-frequency or high-frequency in a seven-stage Likert scale illustrated in (a) of FIG. 3. Closer to the scale 1 indicates a higher frequency (sensation closer to 80 Hz taught to the subject), and closer to the scale 7 indicates a lower frequency (sensation close to 10 Hz taught to the subject).

The stimulus was presented repeatedly until the subjects could not answer. Different types of stimulus were presented randomly to avoid an order effect. The subjects were subjected to an experiment with their hearing being blocked with white noise and soundproof earmuff. The stimulus in the experiment was output from a voice coil vibrator (VP4, Acouve Laboratory, Inc.) held by the subjects, via a USB audio interface (ASUS, XONAR U7 MK II) and an audio amplifier (SMSL SA-36A PRO).

As illustrated in (b) of FIG. 3, according to the sensation, in the case targeting low-frequency vibrations of 10 Hz, not only low-frequency vibrations having a frequency of 10 Hz itself (raw wave) but also single waveforms of 60 Hz, 80 Hz, and 100 Hz presented very strong low-frequency sensation. In addition, the case of 20 Hz presented a low-frequency sensation that was slightly lower than that of the low-frequency sensation of 10 Hz, including the 20 Hz low-frequency vibration itself (raw wave).

In the cases of 30 Hz and 40 Hz, a sensation close to high-frequency was often sensed, including the low-frequency vibration of 30 Hz and 40 Hz itself (raw wave).

On the other hand, for all the frequencies of 10 Hz, 20 Hz, 30 Hz, and 40 Hz, the median scale values of the answers tended to be close to the values answered by the subjects under the low-frequency vibration itself at 10 Hz, 20 Hz, 30 Hz, and 40 Hz, and the values answered by the subjects under the alternative vibration created at 60 Hz, 80 Hz, and 100 Hz. This suggests that for all the frequencies of 10 Hz, 20 Hz, 30 Hz, and 40 Hz, the subjects obtained a sensation similar to the low-frequency vibration itself of the sensation produced by the low-frequency vibration itself (raw wave) at 10 Hz, 20 Hz, 30 Hz, and 40 Hz under the alternative vibration created at 60 Hz, 80 Hz, and 100 Hz.

As described above, it can be seen that, by using the presentation method of alternative vibration of the present invention, it is possible to present a sensation close to the target low-frequency vibration to the subject even under a vibration of 60 Hz, 80 Hz, or 100 Hz.

In the subject experiment in FIG. 3, a voice coil vibrator capable of presenting vibrations of approximately 10 Hz to 100 Hz was used to strictly prevent the subjects from selecting the answer based on information other than the vibration. However, it has been confirmed that, by using the method of the present invention, even with a voice coil vibrator that cannot present vibrations of 10 Hz to 50 Hz, it is possible to present the subjects with a sensation similar to low-frequency vibrations, which could not be presented originally.

A-4. Method for Determining Amplitude and Timing of Alternative Vibration from Target Signal

The above has described a method for creating an alternative vibration based on an ideal original signal (target signal). In reality, however, the original signal (target signal) to be reproduced in music, games, etc. is a complicated vibration. The following will describe a method for creating the alternative vibration of the present invention in such a complicated vibration.

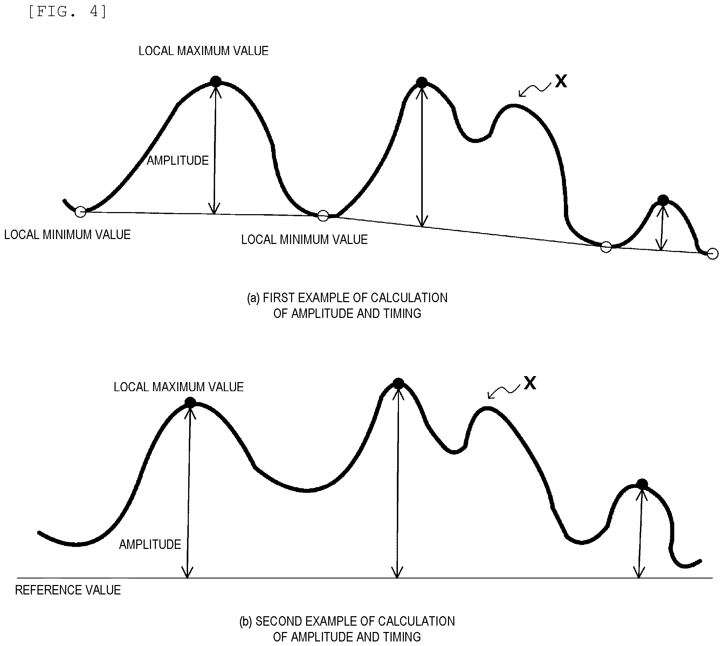

(a) of FIG. 4 is a graph illustrating a first example and (b) of FIG. 4 is a graph illustrating a second example of the calculation by the calculation unit 102 of the amplitude and the timing for generating the single waveform by controlling the actuator 31 with the control unit 103, using an example of a signal of a vibration generated in music or the like that is acquired in advance by the acquisition unit 101 of the vibration generation system 100 illustrated in FIG. 1 or that is stored in the storage device 13, etc. in advance.

In the first example illustrated in (a) of FIG. 4, the vibration to be reproduced is illustrated as a low-frequency signal (original signal (target signal)) after being separated into a high-frequency signal and a low-frequency signal to be described later. The low-frequency signal is a signal of a predetermined frequency or less, for example, 100 Hz or less, preferably 80 Hz or less, and more preferably 60 Hz or less. It may be determined as appropriate depending on the region difficult for the equipped actuator 31 to reproduce. The low-frequency signal may be processed as a signal of the entire low-frequency signal after being separated, or may be further separated into predetermined low-frequency regions (for example, if a low-frequency signal of 10 Hz or more of 80 Hz or less is acquired, the low-frequency signal may be further separated into 10 Hz to 50 Hz and 50 Hz to 80 Hz, thereby respective low-frequency signals may be applied to the processing of the calculation unit 102). In this case, a plurality of alternative vibrations close to the human sensation may be presented in combination for each of the separated frequency bands by controlling various driving parameters of the actuator 31, such as the waveform of the single wave, the single wave cycle time, and the amplitude for each frequency band.

The calculation unit 102 calculates a plurality of local maximum values and local minimum values included in the signal waveform of the low-frequency band. As a result of the experiment conducted by the inventor(s), it has been found that, if the alternative vibration is created at a very short-time interval at which the reverberant vibration is not sufficiently attenuated , the alternative vibration is not perceived by the subjects as the target low-frequency vibration but is perceived as the original high-frequency vibration of the actuator 31. Therefore, to create the alternative vibration of the low-frequency vibration, among the plurality of calculated local maximum values, those separated at a predetermined interval of time or more (hereinafter also referred to as the "interval time") (for example, 0.1 seconds or more) are selected as adjacent local maximum values. If the adjacent local maximum values are not separated by the predetermined interval time or more regarding the time, only the most characteristic (largest) local maximum value among the adjacent local maximum values is selected. In the illustrated example, the point with the "X" mark is not separated by the predetermined interval time or more, and thus is not selected as a local maximum value. The position of a local maximum value thus selected (hereinafter also referred to as "local maximum value time") is calculated as the timing time for presenting the alternative vibration.

On the other hand, regarding the amplitude, in the first example, the distance from the local maximum value to the intersection point between a perpendicular line drawn from the local maximum value and straight lines connecting the plurality of local minimum values is calculated as the amplitude of the alternative vibration (refer to the two-headed arrows) (hereinafter also referred to as "local maximum value amplitude").

The timing and the amplitude for presenting the alternative vibration are determined as described above.

In the second example illustrated in (b) of FIG. 4, the calculation unit 102 calculates only a plurality of local maximum values included in the waveform of the low-frequency band. The selection of the local maximum values is the same as that of the first example, and the position of a selected local maximum values (local maximum value time) is calculated as the timing time for presenting the alternative vibration.

On the other hand, in the second example, regarding the local maximum value amplitude, the distance from a predetermined reference value to the local maximum value is calculated as the amplitude of the alternative vibration (see the two-headed arrows).

The first example is effective if the background noise is large and the target signal waveform in the low-frequency band is small relative to the noise. On the other hand, the second example is effective if the target signal waveform in the low-frequency band is sufficiently large relative to the noise.

The timing for outputting the single waveform is not strictly required to be the local maximum value time, and may be generated in a time before, at and after the local maximum value time, that is, transitioned by a predetermined time from the local maximum value time (hereinafter also referred to as "transitioned time"). The transition by the predetermined time (transitioned time) may be set such that the timing at which the housing vibration (reverberant vibration) controlled by the single waveform becomes the maximum coincides with the local maximum value time obtained from the target signal or substantially the same time as the local maximum value time, as long as humans do not feel strange.

The transitioned time is determined depending on the extent to which humans can tolerate the lag of the visual sense or hearing presented from the output unit 42. According to the current studies, there is a threshold value for humans to notice a lag of about 0.04 seconds in repeated sensations and about 0.03 seconds in a single sensation. Therefore, the transitioned time can be set within a range of, for example, about $\pm 0.04$ seconds, but is desirably set within a range of about $\pm 0.02$ seconds so that sensitive humans do not feel strange.

The generation timing of the single waveform is desirably maintained at the interval time between the calculated local maximum values.

The reason why the timing is not required to be strictly the local maximum value time is considered as that humans who sense the vibration hardly notice even if the timing for outputting the single waveform is lagged by a certain amount, and that for presenting the alternative vibration of the low-frequency region to the user, it is important to reproduce the time between the main local maximum values of the target signal to be reproduced.

In (a) and (b) of FIG. 4, the maximum value and the maximum value time are determined based on the waveform, the amplitude height, and the like, but are not limited thereto. For example, the maximum value and the maximum value time may be obtained based on the mean square, the effective value, the amount of change, or the like of the signal. Any method may be used as long as the maximum value and the maximum value time as characteristic points of the signal can be determined.

The amplitude of the alternative vibration is not required to be exactly the magnitude of the local maximum value amplitude obtained in (a) and (b) of FIG. 4, and may be determined by multiplying the obtained local maximum value amplitude by a predetermined ratio. The predetermined ratio may be adjusted depending on the characteristics of the housing and the actuator to be used so as to approach the low-frequency sensation of the original signal (target signal). The calculated amplitude may be adjusted with an exponential function or the like so as to match a nonlinear subjective intensity perceived by humans. The predetermined ratio may be, for example, 80% or more and 120% or less relative to the obtained local maximum value amplitude.

The amplitude of the alternative vibration may be presented with a predetermined constant amplitude if the maximum value amplitude of the signal to be reproduced almost does not change. In this case, it is not necessary to obtain the maximum value amplitude.

Next, a method for determining the amplitude and the timing of the low-frequency vibration for a target signal acquired online and in real-time by the input unit 41 will be described.

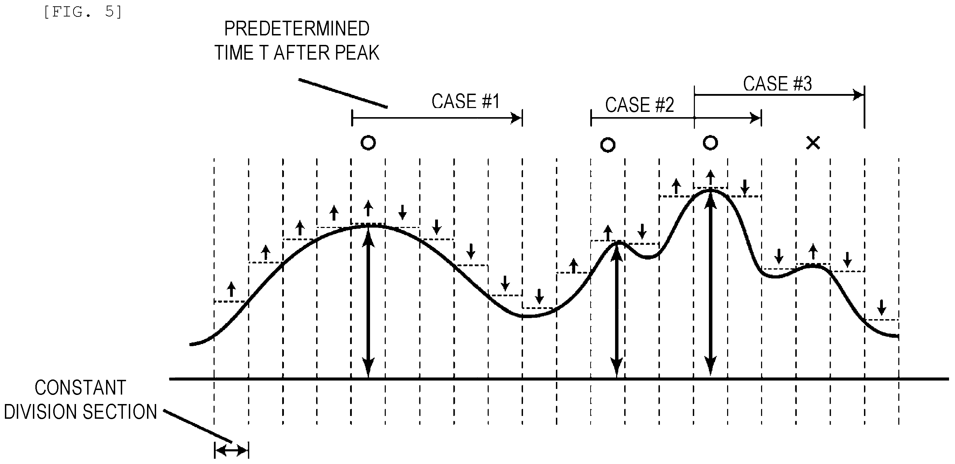

FIG. 5 is a graph illustrating the processing of acquiring information acquired online and in real-time by the input unit 41 as a signal by the acquisition unit 101, separating the signal into high-frequency vibration and low-frequency vibration, extracting the low-frequency vibration as the target, and determining the amplitude and the timing of the alternative vibration. The horizontal axis illustrates the passage of time.

The extracted original signal of the low-frequency vibration (target signal) is divided into a certain time, and the maximum value in each division section is calculated. The certain division section may coincide with a section necessary for processing the separated high-frequency vibration. The division section is only required to be 0.02 seconds or less, and may be an interval of 0.01 seconds, 0.005 seconds, or the like. In the division section, a section in which the maximum value turns from increase to decrease is detected, and the maximum value immediately before the maximum value turns to decrease is calculated as the local maximum value time of the original signal. Time differentiation may be used when calculating the local maximum value. A period of a predetermined time T (for example, within 0.1 seconds) determined based on the above-described interval time after the local maximum value (peak value) is detected may exclude the next peak according to a predetermined rule (for example, if the peak value is not larger than the previous local maximum value by 20% or more). The circle marks in FIG. 5 indicates sections including a local maximum value that is detected within a predetermined time and not excluded, and the cross mark indicates a section including a local maximum value that is excluded.

A case #1 indicates a case where the next local maximum value was not detected within the predetermined time T. In this case #1, as usual, the local maximum value in the detected state is determined as the output timing (local maximum value time) of the single wave. A case #2 indicates a case where the next local maximum value is detected within a predetermined time but is not excluded because the next local maximum value is larger than the previous local maximum value by more than a predetermined value. The predetermined value is, for example, 20% or more larger than the previous local maximum value. In this case #2, both the detected initial local maximum value and the next local maximum value, which is larger by 20% or more than the previous local maximum value, are determined as the output timing (local maximum value time) of the single wave. However, the elapsed time of the predetermined time T may be prioritized, and a next local maximum value at which the predetermined time T has not elapsed may be excluded from the output timing of the single wave. A case #3 indicates a case where the next local maximum value is detected within a predetermined time T, but is excluded because it is smaller than the previous local maximum value. In this case #3, only the detected initial local maximum value is determined as the output timing, and the next small local maximum value is excluded from the output timing of the single wave. However, the next small local maximum value of the case #3 may be taken as the output timing (local maximum value time) of the single wave if the elapsed time of the predetermined time T is prioritized and a next local maximum value for which the predetermined time T has not elapsed (the initial local maximum value taken as the output timing in the case #3) is excluded from the output timing of the single wave in the case #2.

Whether to prioritize being larger than the previous local maximum value by more than the predetermined value or to prioritize the elapsed time of the predetermined time T is determined depending on the situation of the signal to be reproduced and the situation of presentation.

The method for calculating the local maximum value can also be used to calculate the local minimum value by obtaining the minimum value within a section and obtaining the section where the signal turns from decreasing to increasing. The calculated local maximum value and local minimum value can be applied to the method of FIG. 4(a) to calculate the amplitude of the short-time single waveform. In the case of online processing, the output timing of the single wave is output as soon as possible after the amplitude of the single waveform is calculated by the method illustrated in (a) and (b) of FIG. 4. Regarding the amplitude, the amplitude of the single waveform may be calculated in advance by buffering a signal of the predetermined time T or more.

When the above-described original signal acquired online is to be reproduced again after put online, the signal acquired in advance may be set with different output timing and amplitude in accordance with the method of (a) and (b) of FIG. 4. On the other hand, to reproduce the sensation when online, the output timing and the amplitude when online may be stored in the storage device 13 to allow reproduction at such output timing and amplitude.

In (a) and (b) of FIG. 4 and FIG. 5, the local maximum value time and the local maximum value amplitude calculated by the calculation unit 102 are stored in the storage device 13, as time series data for reproduction, in association with other visual and auditory information. By reading the time series data for reproduction stored in the storage device 13, it is possible to control the driving timing of the actuator 31 with the control unit 103 in both the visual and auditory information at any time, and to provide the user with a sense rich in immersive experience.

A-5. Processing of Calculation Unit

Next, the processing of the calculation unit 102 of the vibration generation system 100 will be described in detail.

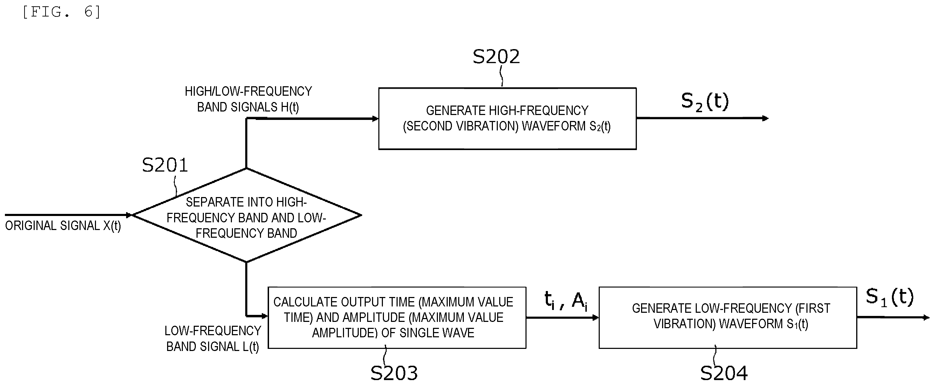

FIG. 6 is a block diagram illustrating the generation of the vibration waveform in the first frequency band which is a low-frequency region, and the vibration waveform in the second frequency band which is a high-frequency region, based on original signals of vibrations generated in music, movies, games and the like acquired by the acquisition unit 101 by the calculation unit 102, or original signals stored in advance in the storage device 13 or the like.

Step 201 is a step of separating a signal of a predetermined frequency or less from a signal X(t) acquired by the acquisition unit 101 or stored in advance in the storage device 13 or the like (in other words, a signal as the target to be reproduced before conversion) into signals including a high-frequency band signal H(t) and a low-frequency band signal L(t).

The high-frequency band signal H(t) is removed of a signal that is a signal having a predetermined frequency or less by using a high-frequency band pass filter such as a high-pass filter. A known method is used for the method for separation and removal. In a second vibration waveform generation step 202, the separated high-frequency band signal H(t) generates a second vibration waveform $S_2$(t) which is a waveform of a high-frequency band.

On the other hand, the low-frequency band signal also filters the low-frequency band signal L(t) of a predetermined frequency or less from the signal X(t) using a low-frequency band pass filter such as a low-pass filter. Next, in the calculation step 203 of the calculation unit 102, the amplitude (maximum value amplitude) $A_i$ (i is the number of single wave to be generated) and the output time (maximum value time) $t_i$ of the single wave are calculated based on the extracted low-frequency band signal L(t) by the method described with reference to FIGS. 4 and 5. The first vibration generation step 204 generates a first vibration waveform (alternative vibration) $S_1$(t) which is a waveform of a low-frequency band based on the amplitude $A_i$ and the output time $t_i$ calculated in step 203 of the single wave. At this time, the first vibration generation step 204 determines the shape of the single wave by referring to single wave parameters for determining the single waveform. The single wave parameters may include numerical values such as the single wave cycle time, transitioned time, interval time, or amplitude ratio of the single wave.

A-6. Processing of Control Unit

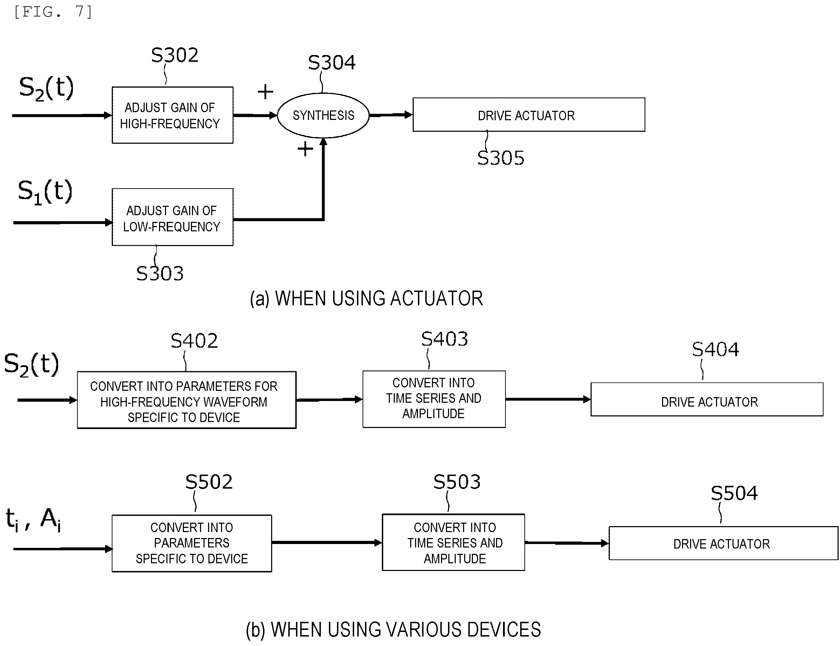

(a) of FIG. 7 is a block diagram illustrating the vibration generation when the actuator 31 is controlled by the control unit 103 of a general device, and (b) of FIG. 7 is a block diagram illustrating the vibration generation when using a device having a parameter conversion function specific to a device such as mobile terminals including smartphones.

In (a) of FIG. 7, in a high-frequency gain adjustment step 302, a high-frequency band gain adjuster is used to adjust the high-frequency gain of the second vibration waveform $S_2$(t) of the high-frequency band signal generated in the second vibration waveform generation step 202 of FIG. 6. On the other hand, in a low-frequency gain adjustment step 303, a low-frequency band gain adjuster is used to adjust the low-frequency gain of the first vibration waveform (alternative vibration) $S_1$(t) of the low-frequency band signal generated in the first vibration generation step 204 of FIG. 6.

In a synthesis step 304, the first vibration waveform $S_1$(t) and the second vibration waveform $S_2$(t), whose gain is adjusted, are synthesized into a synthetic wave. In the drive step 305, a signal is generated by the control unit 103 of the vibration generation system 100 based on the synthetic wave of the synthesis step 304 to drive the actuator 31.

In (b) of FIG. 7, if the vibration generation system 100 has a parameter conversion function specific to a device such as a mobile terminal, in the high-frequency conversion step 402, regarding the high-frequency band signal, the second vibration waveform $S_2$(t) of the high-frequency band signal generated in the second vibration waveform generation step 202 of FIG. 6 is converted into a high-frequency parameter series based on a conversion defined by the operating system (OS) of the mobile terminal. The signal converted into the high-frequency parameter series in step 402 is converted into a time series and an amplitude series in step 403. In step 404, the control unit 103 drives the actuator 31 to create and reproduce a tactile pattern.

On the other hand, regarding the low-frequency band signal, in the calculation step 203 of FIG. 6, the amplitude $A_i$ and the output time (timing) $t_i$ of the single wave calculated by the calculation unit 102 are converted into parameters specific to the mobile terminal in step 502. The signal converted into the parameter series is converted into a time series and an amplitude series in step 503. In step 504, the control unit 103 drives the actuator 31 to create and reproduce a tactile pattern.

[B] Modification

In the vibration presentation device 1 according to the above-described embodiment, a vibration of a low-frequency band of about several tens of Hz, which is lower than the resonance frequency band that can be presented by the actuator, is converted into a vibration that can be easily sensed by humans.

The present invention is performed using an LRA having a resonance frequency of around 100 Hz to 300 Hz, which is generally equipped on a mobile terminal or the like, and can be used in combination with various techniques.

For example, in the cited PTL 2, the inventors of the present application disclose a technique of maintaining the energy of a signal at a high-frequency by using an energy control unit, thereby converting the signal to about 200 Hz while maintaining a high-frequency tactile sensation. This can be used in combination with the presentation method based on an alternative vibration for a vibration in a low-frequency band of the present application. Even if an LRA having a narrow frequency band is used, the combination of the present invention and the technique disclosed in PTL 2 can present a sensation of a wide frequency band of about several tens of Hz to 400 Hz. This increases the freedom in design of the device and enables a reduction in size and cost.

[C] Effects

For example, the following effects can be obtained according to the vibration presentation device, the vibration presentation program, the computer-readable recording medium storing the vibration presentation program, and the vibration presentation method in the embodiment.

According to the present invention, by the actuator 31 generating an alternative vibration, a vibration having a frequency lower than the resonance frequency band of the actuator 31 can be presented after being converted into a vibration that can be easily perceived as a low frequency by humans. In particular, it is difficult in the related art for a portable device or the like such as a smartphone using an LRA as a vibrator to express a low-frequency of about 10 Hz to 50 Hz with the LRA, but it is possible to present a low-frequency sensation by using the present invention.

As a result, a low-frequency vibration can be expressed in a portable device, a game controller, or the like, and a vibration can be presented with an immersive experience. In addition, it is possible to present sensation vibrations in music, movies, videos or the like in a portable device or the like.

The present invention acquires the signal including the first frequency band vibration, which is a low-frequency band vibration, based on the original signal as the target to be reproduced, obtains the local maximum value of the acquired vibration in the first frequency band and obtains the local maximum value time that is the time of reaching the local maximum value by the calculation unit 102, and, based on the calculated local maximum value time, drives the actuator 31 to generate the single wave within the transitioned time that does not affect the human sensation around the local maximum value time. Thereby, a pseudo low-frequency vibration is presented even if the actuator 31 is not capable of generating a vibration in the low-frequency band, so that it is possible to present the user with a low-frequency bodily sensation without the need for an additional actuator, which leads to a reduction in size of the device.

Further, by obtaining the local maximum value amplitude at the local maximum value time, it is possible to present low-frequency vibrations with higher accuracy.

In addition, by determining the single wave cycle time and the transitioned time for generating the single wave based on the human sensation or the like, it is possible to reduce a feeling of high-frequency vibration.

The calculation unit 102 sets the interval time, which is the time interval between the adjacent local maximum values when calculating the local maximum value time based on a signal having a plurality of local maximum values, to 0.1 seconds or more. Thereby, the sensation given to humans by the presented alternative waveform does not give the sensation of high-frequency vibration.

If the vibration is to be provided online, the calculation unit 102 may calculate the second local maximum value even if the interval time between the first local maximum value and the second local maximum value is equal to or less than the predetermined interval time, if the intensity of the second local maximum value immediately after the first local maximum value among the plurality of local maximum values is greater than the intensity of the first local maximum value by a predetermined ratio or more. Thereby, in a real-time case such as online, it is possible to reflect a low-frequency sensation in real-time by giving the user the alternative waveform at characteristic points in the original waveform.

The control unit 103 generates a sine wave or a pulse wave having an intensity of 80% or more and 120% or less relative to the intensity of the local maximum value amplitude. Thereby, the intensity of the alternative waveform can be controlled appropriately, and the immersive experience is enhanced.

The actuator of the present invention uses the housing that generates a reverberant vibration, and can present a more realistic low-frequency alternative vibration to the user by using the reverberation.

[D] Others

The disclosed technique is not limited to the above-described embodiments, and various modifications can be made without departing from the gist of each embodiment. Each configuration and each processing of each embodiment may be selected as necessary or may be combined as appropriate.

The vibration generation system 100 illustrated in FIG. 1 is provided with one actuator 31, but is not limited thereto. The number of actuators 31 included in the vibration generation system 100 can be changed variously.

Reference Signs List

1:      vibration presentation device
3:      vibration sensation device
11:     CPU
12:     memory
13:     storage device
15:     bus
31:     actuator
32:     drive unit
33:     reception unit

34:     housing
41:     input unit
42:     output unit
43:     transmission unit
100:    vibration generation system
101:    acquisition unit
102:    calculation unit
103:    control unit

**Claims**

1.  A vibration presentation device for presenting a vibration in a first frequency band by an actuator having a resonance frequency in a second frequency band larger than the first frequency band, the vibration presentation device comprising:

    an acquisition unit configured to acquire a signal including at least a vibration in the first frequency band, which is a resonance frequency lower than the second frequency band;
    a calculation unit configured to obtain a local maximum value of the vibration in the first frequency band acquired by the acquisition unit and obtain, based on the local maximum value, a local maximum value time that is a time of reaching the local maximum value; and
    a control unit configured to, based on the local maximum value time calculated by the calculation unit, control the actuator to generate a single wave within a transitioned time that is a time before, at and after the local maximum value time.

2.  The vibration presentation device according to claim 1, wherein
    the calculation unit obtains a local maximum value amplitude that is an amplitude of the local maximum value at the local maximum value time.

3.  The vibration presentation device according to claim 1, wherein
    a single wave cycle time for generating the single wave is a time of 0.002 seconds or more and 0.02 seconds or less.

4.  The vibration presentation device according to claim 1, wherein
    the transitioned time is a time of 0.04 seconds or less.

5.  The vibration presentation device according to claim 1, wherein
    the calculation unit calculates a plurality of local maximum values, and calculates the local maximum value time for adjacent local maximum values whose interval time is 0.1 seconds or more, the interval time being a time interval between the adjacent local maximum values.

6.  The vibration presentation device according to claim 5, wherein
    the calculation unit calculates a plurality of local maximum values, and calculates the local maximum value time even if the interval time between a first local maximum value and a second local maximum value immediately after the first local maximum value among the plurality of local maximum values is equal to or less than the interval time, if an intensity of the second local maximum value is greater than an intensity of the first local maximum value by a predetermined ratio or more.

7.  The vibration presentation device according to claim 2, wherein
    the single wave generated by the control unit has an amplitude of 80% or more and 120% or less relative to the local maximum value amplitude.

8.  The vibration presentation device according to claim 1, wherein
    the first frequency band is 10 Hz or more and 100 Hz or less.

9.  The vibration presentation device according to claim 1, wherein
    the calculation unit calculates the local maximum value of the vibration based on a waveform of the vibration or an amplitude of the vibration.

10. A vibration generation system comprising:

the vibration presentation device according to claim 1; and
a vibration sensation device including the actuator having a resonance frequency in the second frequency band and a housing configured to generate a reverberant vibration under control of the actuator.

11. The vibration generation system according to claim 9, wherein
the transitioned time is set to a time at which the reverberant vibration of the housing reaches a maximum during a time including the local maximum value time.

12. A vibration presentation program for causing a computer to execute:

a step of acquiring a signal including a vibration in a first frequency band, which is a resonance frequency lower than a second frequency band;
a calculation step of obtaining a local maximum value of the vibration in the first frequency band acquired by the step of acquiring and obtain, from the local maximum value, a local maximum value time that is a time of reaching the local maximum value; and
a drive step of, based on the local maximum value time calculated by the calculation step, controlling an actuator having a resonance frequency in the second frequency band to generate a single wave within a transitioned time that is a time before, at and after the local maximum value time.

13. A recording medium storing the vibration presentation program according to claim 12.

14. A vibration presentation method for presenting a vibration in a first frequency band by an actuator having a resonance frequency in a second frequency band larger than the first frequency band, the vibration generation method comprising:

a step of acquiring a signal including at least a vibration in the first frequency band, which is a resonance frequency lower than the second frequency band;
a calculation step of obtaining a local maximum value of the vibration in the first frequency band acquired by the step of acquiring and obtain, from the local maximum value, a local maximum value time that is a time of reaching the local maximum value; and
a drive step of, based on the local maximum value time calculated by the calculation step, controlling an actuator having a resonance frequency in the second frequency band to generate a single wave within a transitioned time that is a time before, at and after the local maximum value time.

EP 4 534 214 A1

[FIG. 1]

[FIG. 2]

(a) EXAMPLES OF LOW-FREQUENCY SIGNAL TO BE
PRESENTED (DOTTED LINE) AND SHORT-TIME PULSE
WAVEFORM TO BE CONTROLLED (SOLID LINE)

(b) EXAMPLES OF REVERBERANT VIBRATION
GENERATED IN HOUSING (MEASURED BY
LASER DISPLACEMENT METER)

[FIG. 3]

| SCALE | ANSWER |
|---|---|
| 7 | STRONGLY CONSIDER AS LOW-FREQUENCY |
| 6 | SLIGHTLY CONSIDER AS LOW-FREQUENCY |
| 5 | CONSIDER AS LOW-FREQUENCY |
| 4 | CONSIDER AS NEITHER |
| 3 | SLIGHTLY CONSIDER AS HIGH-FREQUENCY |
| 2 | CONSIDER AS HIGH-FREQUENCY |
| 1 | STRONGLY CONSIDER AS HIGH-FREQUENCY |

(a) SELECTIONS OF ANSWER BY SUBJECTS

(b) ANSWER RESULTS WHEN ORIGINAL
LOW-FREQUENCY WAVEFORM IS 10 Hz

(c) ANSWER RESULTS WHEN ORIGINAL
LOW-FREQUENCY WAVEFORM IS 20 Hz

(d) ANSWER RESULTS WHEN ORIGINAL LOW-
FREQUENCY WAVEFORM IS 30 Hz

(e) ANSWER RESULTS WHEN ORIGINAL
LOW-FREQUENCY WAVEFORM IS 40 Hz

[FIG. 4]

LOCAL MAXIMUM VALUE

X

AMPLITUDE

LOCAL MINIMUM VALUE

LOCAL MINIMUM VALUE

(a) FIRST EXAMPLE OF CALCULATION
OF AMPLITUDE AND TIMING

LOCAL MAXIMUM VALUE

X

AMPLITUDE

REFERENCE VALUE

(b) SECOND EXAMPLE OF CALCULATION
OF AMPLITUDE AND TIMING

[FIG. 5]

PREDETERMINED
TIME T AFTER PEAK

CASE #3

CASE #1

CASE #2

CONSTANT
DIVISION SECTION

EP 4 534 214 A1

[FIG. 6]

EP 4 534 214 A1

[FIG. 7]

$S_2(t)$ → S302 ADJUST GAIN OF HIGH-FREQUENCY → + → S304 SYNTHESIS → DRIVE ACTUATOR
S305

$S_1(t)$ → S303 ADJUST GAIN OF LOW-FREQUENCY → +

(a) WHEN USING ACTUATOR

$S_2(t)$ → S402 CONVERT INTO PARAMETERS FOR HIGH-FREQUENCY WAVEFORM SPECIFIC TO DEVICE → S403 CONVERT INTO TIME SERIES AND AMPLITUDE → S404 DRIVE ACTUATOR

$t_i , A_i$ → S502 CONVERT INTO PARAMETERS SPECIFIC TO DEVICE → S503 CONVERT INTO TIME SERIES AND AMPLITUDE → S504 DRIVE ACTUATOR

(b) WHEN USING VARIOUS DEVICES

EP 4 534 214 A1

## INTERNATIONAL SEARCH REPORT

International application No.

**PCT/JP2022/022009**

### A. CLASSIFICATION OF SUBJECT MATTER

***B06B 1/00***(2006.01)i

FI: B06B1/00

According to International Patent Classification (IPC) or to both national classification and IPC

### B. FIELDS SEARCHED

Minimum documentation searched (classification system followed by classification symbols)

B06B1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2014/207842 A1 (FUJITSU LTD.) 31 December 2014 (2014-12-31) paragraphs [0010]-[0121], fig. 1-21 | 1-14 |
| A | JP 2012-168775 A (NIKON CORP.) 06 September 2012 (2012-09-06) paragraphs [0011]-[0040], fig. 1-6 | 1-14 |
| A | WO 2021/085506 A1 (TOHOKU UNIV.) 06 May 2021 (2021-05-06) paragraphs [0009]-[0145], fig. 1-24 | 1-14 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 July 2022** | **09 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/022009**

| Patent document cited in search report | | | Publication date (day/month/year) | Patent family member(s) | | | Publication date (day/month/year) |
|---|---|---|---|---|---|---|---|
| WO | 2014/207842 | A1 | 31 December 2014 | US 2016/0103491 A1 paragraphs [0044]-[0148], fig. 1-21 | | | |
| JP | 2012-168775 | A | 06 September 2012 | (Family: none) | | | |
| WO | 2021/085506 | A1 | 06 May 2021 | TW 202133950 | A | | |

Form PCT/ISA/210 (patent family annex) (January 2015)

**EP 4 534 214 A1**

**Patent documents cited in the description**

- JP 2003228453 A
- WO 2021085506 A
- JP 2021527257 T
- JP 2004181304 A